Europäisches Patentamt

European Patent Office

Office européen des brevets

(19)

(11) Numéro de publication: **0 230 806**
**B1**

(12) **FASCICULE DE BREVET EUROPEEN**

(45) Date de publication du fascicule du brevet:
**05.07.89**

(51) Int. Cl.⁴: **B60R 5/04**

(21) Numéro de dépôt: **86402714.9**

(22) Date de dépôt: **08.12.86**

(54) Dispositif de cloisonnement transparent pour véhicule muni d'un volet arrière.

(30) Priorité: **24.12.85 FR 8519173**

(43) Date de publication de la demande:
**05.08.87 Bulletin 87/32**

(45) Mention de la délivrance du brevet:
**05.07.89 Bulletin 89/27**

(84) Etats contractants désignés:
**DE GB IT**

(56) Documents cités:
**DE-A- 2 729 877**
**FR-A- 2 353 417**
**FR-A- 2 452 571**
**FR-A- 2 564 791**
**GB-A- 2 025 868**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Le Vitre, Gilles, 28, Chemin du Pont, F-92230 Gennevilliers(FR)**
Inventeur: **Prion, Christian, 1, square Yves du Manoir, F-91300 Massy(FR)**

(74) Mandataire: **Moncheny, Michel et al, c/o Cabinet Lavoix 2 Place d'Estienne d'Orves, F-75441 Paris Cedex 09(FR)**

Il est rappelé que: Dans un délai de neuf mois à compter de la date de publication de la mention de la délivrance du brevet euro-péen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention se rapporte aux véhicules munis d'un volet arrière c'est-à-dire d'une porte vitrée s'articulant près de son bord supérier à l'arrière du pavillon et située au-dessus d'un coffre à bagages agencé derrière un siège arrière une tablette s'étendant vers l'arrière à partir du haut de ce siège. Elle concerne un dispositif de cloisonnement disposé entre le siège arrière et le volet de manière à isoler thermiquement l'habitacle lorsque le volet est ouvert, faisant communiquer le coffre avec l'extérieur.

Un tel dispositif permet de cumuler sur un même véhicule certains avantages procurés d'une part par les véhicules "bi-corps" à volet arrière : large accessibilité au coffre à bagages et forme aérodynamique : d'autre part par les véhicules "tri-corps" à couvercle sur coffre derrière une vitre fixe assurant l'isolement permanent de l'habitacle vers l'arrière. Mais le cloisonement entre siège arrière et volet risque de gêner le chargement de grands objets impliquant le basculement du siège arrière vers l'avant.

Il est connu par le document FR-A 2 452 571 de réaliser ce cloisonnement au moyen d'une vitre sensiblement verticale disposée juste derrière le siège arrière et s'étendant du haut du dossier jusqu'au pavillon. Pour que cette vitre n'empêche pas d'utiliser à partir de l'habitacle une tablette généralement placée sur le coffre et derrière le haut du dossier, elle est prévue coulissante, à déplacement transversal ou vertical. Le coulissement peut s'effectuer soit manuellement, ce qui est fastidieux, soit au moyen d'un mécanisme coûteux et encombrant. Dans tous les cas, l'aménagement d'une vitre coulissante juste derrière le haut du siège présente une gêne pour les occupants du siège arrière et implique des précautions pour placer des objets sur la tablette.

L'invention a pour but d'aménager dans un véhicule muni d'un volet arrière un dispositif simple de cloisonnement qui isole l'habitacle quand le volet est ouvert et qui permette l'usage normal d'une tablette arrière et l'éventuel chargement de grands objets nécessitant le retrait de la tablette et le basculement du siège arrière.

L'invention concerne un dispositif de cloisonnement pour véhicule muni d'un volet s'articulant à l'arrière du pavillon et situé au-dessus d'un coffre à bagages agencé derrière un siège arrière, une tablette s'étendant vers l'arrière à partir du haut de ce siège.

Suivant l'invention le dispositif est caractérisé en ce qu'il comporte une cloison transparente amovible mise en appui par son bord inférieur sur une portion arrière de la tablette, et par sa partie supérieure sur au moins un élément d'appui solidaire de la carrosserie de véhicule.

Selon quelques caractéristiques avantageuses :
- le bord supérieur de la cloison est engagé dans une rainure pratiquée dans un élément d'appui fixé sur une traverse arrière du pavillon du véhicule ;
- Les bords latéraux de la cloison sont en appui sur des éléments d'appui latéraux et fixés à ceux-ci par deux crochets solidaires de poignées s'articulant sur la cloison.

Un exemple de réalisation non limitatif d'un dispositif selon l'invention est décrit ci-après avec référence aux dessins annexés sur lesquels :

- la Fig. 1 est une vue simplifiée en élévation et en coupe par un plan longitudinal de la partie arrière d'un véhicule équipé du dispositif de cloisonnement selon l'invention, volet arrière fermé ;
- la Fig. 2 est une vue analogue à celle de la Fig. 1 volet arrière ouvert ;
- la Fig. 3 est une vue à plus grande échelle d'un détail du dispositif en coupe par un plan vertical longitudinal du véhicule ;
- et la Fig. 4 est une vue également à plus grande échelle d'un détail du dispositif en coupe suivant la ligne IV-IV de la Fig. 1.

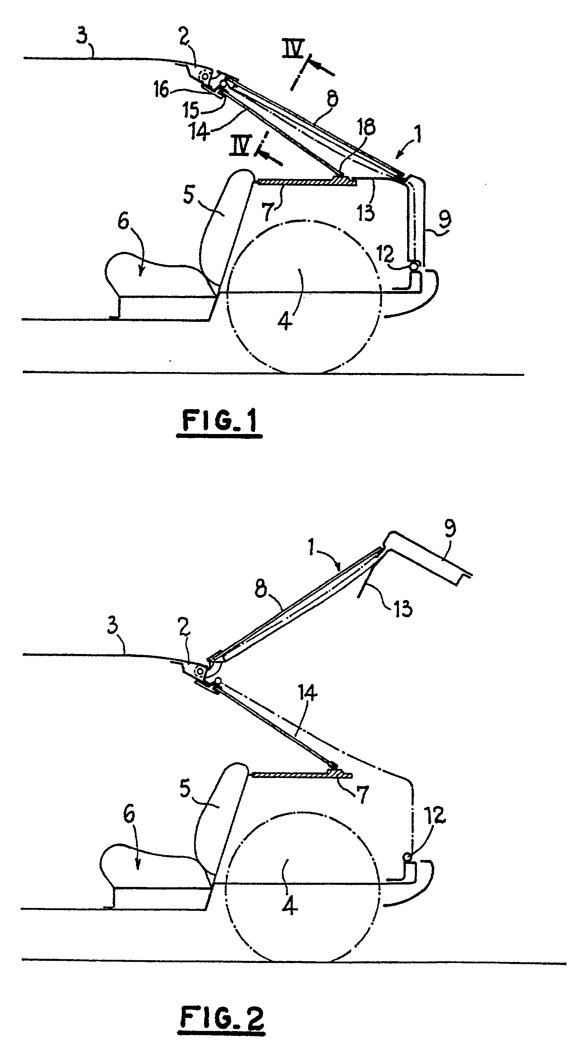

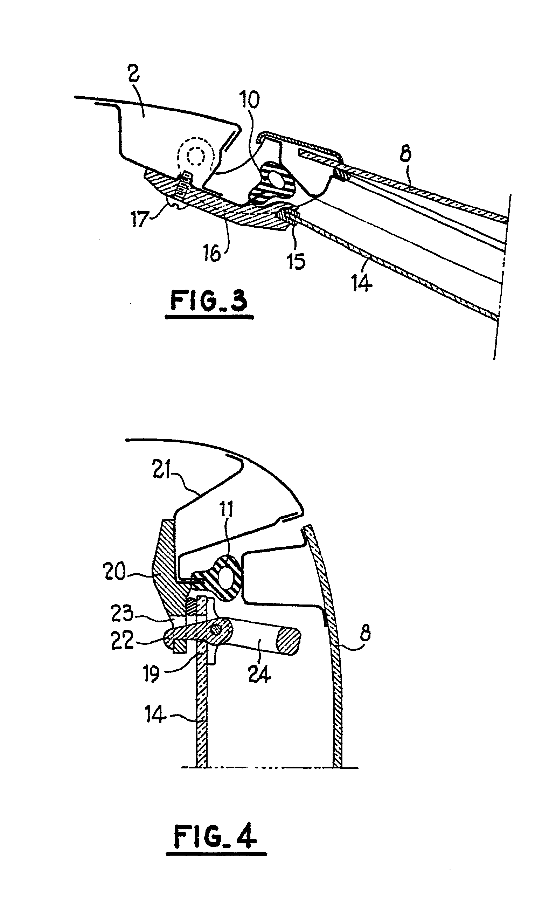

On voit sur les figures 1 et 2 la partie arrière d'un véhicule muni d'un volet arrière 1 qui s'articule sur une traverse arrière 2 du pavillon 3 du véhicule et que est situé au-dessus d'un coffre à bagages 4 agencé derrière le dossier 5 d'un siège arrière 6, et délimité à sa partie supérieure par une tablette 7 s'étendant vers l'arrière à partir du haut du dossier 5. La tablette 7 est fixée à la carrosserie du véhicule de façon connue non représentée par des moyens usuels, la rendant aisément amovible.

La traverse 2 étant située à peu près au-dessus du dossier 5, le volet 1 comporte une portion supérieure 8 vitrée et inclinée et une portion arrière 9 sensiblement verticale reposant respectivement en position fermée sur des joints d'étanchéité supérieur 10, latéraux 11 et inférieur 12. La portion 9 est solidaire à sa partie supérieure d'une plaque 13 qui s'étend, quand le volet 1 est fermé, jusqu'à l'extrémité arrière de la tablette 7. Ainsi le coffre est délimité (Fig. 1) à l'arrière par la portion 9 et au-dessus par la tablette 7 et la plaque 13, tandis que lorsque le volet 1 est ouvert (Fig. 2) le coffre peut être chargé ou déchargé par l'espace séparant le joint 12 de l'extrémité arrière de la tablette 7.

Selon l'invention, une cloison transparente 14 est disposée entre le haut du dossier 5 et le volet 1. Son bord supérieur 15 (Fig. 3) étant engagé dans une rainure d'un élément d'appui 16 fixé à la traverse 2 par des vis 17, et ses bords inférieur 18 et latéraux 19 (Fig. 4) étant en appui respectivement sur une portion arrière de la tablette 7 et sur des éléments latéraux 20 fixés, notamment par vissage ou collage, à des membrures 21 de la carroserie du véhicule. Les éléments 16 et 20 s'étendent de préférence sur toute la longueur du bord correspondant de la cloison 14 pour assurer un ligne de contact continue sur tout le pourtour de la cloison 14 et par suite une séparation étanche entre l'habitacle et la zone située derrière la cloison.

Celle-ci est maintenue en place par deux crochets 22 s'articulant sur elle, chacun près d'un de ses bords latéraux, et coopérant avec une lumière 23 pratiquée dans l'élément d'appui 20 correspondant. Chaque crochet 22 est prolongé du côté du volet par une poignée 24 permettant d'actionner le crochet et de porter la cloison 14.

En position d'utilisation courante représentée aux Fig. 1 et 2, la tablette 7 est utilisable normalement et l'isolement thermique de l'habitacle est assuré en permanence même quand le volet 1 est ouvert,grâce à la tablette 7 et à la cloison 14 en appui sur tout son pourtour comme indiqué plus haut. Le véhicule présente ainsi les mêmes avantages que les véhicules "tri-corps". Le chargement de bagages courants s'effectue alors par l'espace séparant le joint 12 de l'extrémité arrière de la tablette 7.

Pour charger des objets de très grande dimension,on retire aisément la cloison 14 grâce aux poignées 24, en les basculant légèrement pour dégager les crochets 22, puis la tablette 7 classiquement amovible et on bascule éventuellement le dossier 5 vers l'avant,le siège 6 étant avantageusement prévu transformable à cet effet de façon usuelle. Grâce à l'amovibilité aisée du dispositif de cloisonnement décrit, le véhicule conserve donc les avantages d'un véhicule "bi-corps" à volet arrière.

## Revendications

1. Dispositif de cloisonnement pour véhicule muni d'un volet (1) s'articulant à l'arrière d'un pavillon (3) et situé au-dessus d'un coffre à bagages (4) agencé derrière un siège arrière (5), une tablette (7) s'étendant vers l'arrière à partir du haut de ce siège (5),caractérisé en ce qu'il comporte une cloison transparente amovible (14) mise en appui par son bord inférieur (18) sur une portion arrière de la tablette (7), et par sa partie supérieure (15) sur au moins un élément d'appui (16) solidaire de la carrosserie du véhicule.

2. Dispositif selon la revendication 1, caractérisé en ce que le bord supérieur (15) de la cloison(14) est engagé dans une rainure pratiquée dans un élément d'appui (16) fixé sur une traverse arrière (2) du pavillon (3) du véhicule.

3. Dispositif selon l'une des revendications 1 et 2, caractérisé en ce que les bords latéraux (19) de la cloison (14) sont en appui sur des éléments d'appui latéraux (20) et fixés à ceux-ci par deux crochets (22) solidaires de poignées (24) s'articulant sur la cloison (14).

## Patentansprüche

1. Trennvorrichtung für Fahrzeuge, die mit einer Hecktür (1) versehen sind, die hinten an einem Karosserieoberteil (3) gelenkig gelagert, und oberhalb eines Kofferraums (4) angeordnet ist, der hinter einem Rücksitz (5) angeordnet ist, wobei eine Platte (7) sich nach hinten von dem oberen Bereich des Sitzes (5) erstreckt, dadurch gekennzeichnet daß sie eine abnehmbare durchsichtige Trennwand (14) aufweist, welche mit ihrem unteren Ende (18) auf einen hinteren Abschnitt der Platte (7) und mit ihrem oberen Bereich (15) gegen wenigstens ein Andrückelement (16) angedrückt wird, das mit der Karosserie des Fahrzeugs verbunden ist.

2. Vorrichtung nach Anspruch 1, dadurch gekennzeichnet, daß der obere Rand (15) der Trennwand (14) in eine Kerbe eingreift, die in einem Andrückelement (16) ausgebildet ist, das an einer hinteren Traverse (2) des Karosserieoberteils (3) des Fahrzeugs befestigt ist.

3. Vorrichtung nach Anspruch 1 oder 2, dadurch gekennzeichnet, daß die seitlichen Ränder (19) der Trennwand (14) in Andruck auf ein seitliches Andrückelement (20) sind und an diesem durch zwei Haken (22) befestigt sind, die mit Griffen (24) verbunden sind, die an der Trennwand (14) gelenkig gelagert sind.

## Claims

1. A partition device for a vehicle provided with a rear door (1) being hinged at the rear of a roof (3) and situated above a luggage boot (4), arranged behind a rear seat (5), a tray (7) extending rearwards from the top of this seat (5), characterized in that it comprises a transparent detachable partition (14) caused to bear with its lower edge (18) on a rear portion of the tray (7) and with its upper portion (15) on at least one supporting element (16) fixed to the body of the vehicle.

2. A device according to claim 1, characterized in that the upper edge (15) of the partition (14) is engaged in a groove cut in a supporting element (16) fixed on a rear cross member (2) of the roof (3) of the vehicle.

3. A device according to one of claims 1 and 2, characterized in that the lateral edges (19) of the partition (14) bear on lateral supporting elements (20) and are fixed to the latter by two hooks (22) joined to handles (24) being articulated on the partition (14).

EP 0 230 806 B1

FIG.1

FIG.2

FIG. 3

FIG. 4